# EUROPÄISCHE PATENTANMELDUNG

(11) **EP 2 042 787 A2**
(43) Veröffentlichungstag der Anmeldung: **01.04.2009**
(21) Anmeldenummer: 08104878.7
(22) Anmeldetag: 25.07.2008
(51) Int. Cl.: F16J 15/32

(54) **Bauteileanordnung**

(30) Priorität: 25.09.2007 DE 102007045639
(71) Anmelder: Robert Bosch GmbH, 70442 Stuttgart (DE)
(72) Erfinder: Schuetz, Juergen, 77866, Rheinau (DE); Loeffler, Alf, 71706, Markgroeningen (DE); Ewert, Andreas, 77839, Lichtenau (DE); Liedel, Markus, 91257, Pegnitz (DE)

(57) **Zusammenfassung**

Die Erfindung betrifft eine Bauteileanordnung (10) mit einem Gehäuse (12), einer Funktionskomponente (14), einem Ausgangsteil (16) der Funktionskomponente und wenigstens einem Dichtungselement (18) aus vulkanisiertem Silikon, wobei zumindest das Dichtungselement (18) und das Gehäuse (12) miteinander verklebt sind, vorzugsweise mittels Epoxidharz (20). Mit einer derartigen Anordnung erreicht man eine dauerhafte Abdichtung der Bauteileanordnung, welche auch hohen Temperaturwechselbeanspruchungen sicher standhält.

## Beschreibung

### Stand der Technik

Die Erfindung geht aus von einer Bauteileanordnung nach der Gattung des unabhängigen Anspruchs.

Aus der DE 100 81 007 T1 ist eine Bauteileanordnung mit einer Schaltvorrichtung in einem mehrteiligen Gehäuse bekannt, welche insbesondere gegenüber eindringendem Wasser durch ein Dichtungselement aus vulkanisiertem Silikon geschützt ist. Alternativ ist in dieser Druckschrift darauf hingewiesen, dass freiliegende Schaltungsteile innerhalb des Gehäuses durch Epoxid-Beschichtungen wasserbeständig geschützt werden können. Hinweise auf die Möglichkeit des Verklebens eines Dichtungselementes mit einzelnen Komponenten der Bauteileanordnung enthält die Druckschrift nicht.

Darüber hinaus sind im allgemeinen Stand der Technik Dichtungselemente aus vulkanisiertem Silikon bekannt, beispielsweise für Kabeldurchführungen. Epoxidharz ist als Verguss zum Schutz von elektrischen Bauelementen bekannt, beispielsweise in Relais oder Zündspulen von Kraftfahrzeugen. Diese bekannten Dichtungsarten sind jedoch nicht immer befriedigend und weisen temperaturbedingte oder alterungsbedingte Undichtigkeiten auf, insbesondere bei stark wechselnden Betriebsbedingungen, wie sie beispielsweise in Kraftfahrzeugen auftreten.

### Offenbarung der Erfindung

Die erfindungsgemäße Bauteileanordnung mit den Merkmalen des unabhängigen Anspruchs hat demgegenüber den Vorteil, dass durch das Verkleben des Dichtungselementes mit einem oder mehreren angrenzenden Bauteilen eine weitestgehend temperaturunabhängige, langzeitbeständige Abdichtung der Bauteileanordnung erreicht wird. Als Klebemittel hat sich hierbei insbesondere Epoxidharz als vorteilhaft erwiesen, wobei zweckmäßigerweise zur Erzielung einer besonders sicheren und dichten Verklebung die Oberfläche des Dichtungselementes und/oder eines angrenzenden Bauteils, zur Haftungsverbesserung vorbehandelt wird. Besonders vorteilhaft ist hierbei die Vorbehandlung der Oberfläche des Dichtungselementes und/oder des Gehäuses durch ein Atmosphärenplasma.

Zur Verbesserung der Abdichtung ist es weiterhin zweckmäßig, wenn das Dichtungselement im eingebauten Zustand elastisch verformt ist und unter mechanischer Vorspannung steht, insbesondere gegenüber dem Ausgangsteil der Funktionskomponente. Eine besonders gute Abdichtung erreicht man hierbei, wenn das Dichtungselement eine elastisch verformbare Dichtkontur, insbesondere eine oder mehrere Dichtlippen aufweist. Hierbei kann es weiterhin zweckmäßig sein, wenn in das Dichtungselement zur Formstabilisierung ein Einlegeteil integriert ist.

Bei der Verwendung von Epoxidharz als Klebemittel zwischen dem Dichtungselement und benachbarten Bauteilen ist es zweckmäßig, das Epoxidharz als Vergussmasse oder Spritzmasse aufzubringen. Hierdurch wird verfahrenstechnisch sichergestellt, dass das Klebemittel ohne Fügeprobleme alle zu verklebenden Oberflächenabschnitte sicher erreicht und benetzt.

Die erfindungsgemäße Bauteileanordnung hat sich besonders bewährt, wenn als Funktionskomponente ein elektronisches Steuergerät und als Ausgangsteil der Funktionskomponente eine elektrische Anschlussleitung abzudichten sind, da bei derartigen Bauteilen einerseits die Anforderungen an die Abdichtung sehr hoch, andererseits aber schwer zu erfüllen sind, da sie häufig selbst im Betrieb Wärme erzeugen und gegen eindringende Feuchtigkeit besonders empfindlich sind.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: eine Bauteileanordnung, bei welcher eine Funktionskomponente und ein Dichtungselement durch eine Vergussmasse verklebt sind,
- Figur 2: eine Bauteileanordnung, bei der ein Dichtungselement nur mit dem Gehäuse verklebt ist und
- Figur 3: eine Bauteileanordnung mit Dichtungselementen, welche durch Vergussmasse mit anderen Bauteilen und mit dem Gehäuse verklebt sind.

### Ausführungsformen der Erfindung

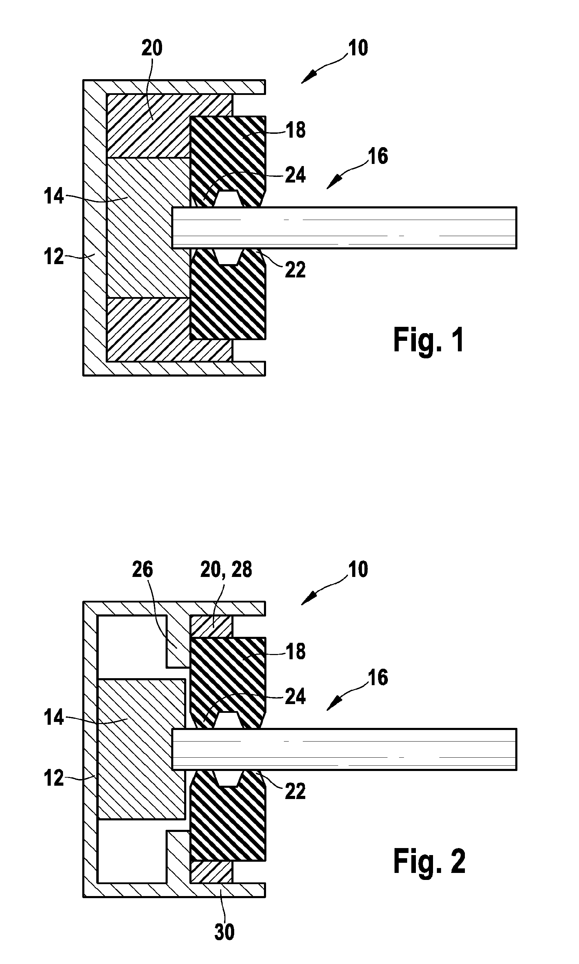

In Figur 1 ist mit 10 eine Bauteileanordnung bezeichnet, welche in einem Gehäuse 12 eine Funktionskomponente 14 in Form eines Elektromotors aufnimmt. Als Ausgangsteil 16 besitzt dieser eine langsam oder intermittierend rotierende Antriebswelle, welche durch ein ringförmiges Dichtungselement 18 gegen Umgebungseinflüsse abgedichtet in das Gehäuse 12 eingeführt ist. Hierzu ist das Ausgangsteil 16 durch zwei umlaufende Dichtlippen 22 und 24 am Dichtungselement 18 spaltfrei umschlossen und das Dichtungselement 18 seinerseits durch Epoxidharzverguss 20 dicht und fest mit dem Gehäuse 12 und mit der Funktionskomponente 14 verklebt.

Das Dichtungselement 18 besteht aus elastischem, vulkanisiertem Silikon. Im eingebauten Zustand ist es elastisch verformt und steht unter mechanischer Vorspannung zu dem Ausgangsteil 16, so dass entlang des Ausgangsteils keine Feuchtigkeit oder Schmutz eindringen kann. Andererseits ist das Dichtungselement 18 durch den Epoxidharzverguss 20 dicht mit dem Gehäuse 12 verbunden, wobei vorzugsweise alle von dem Epoxidharzverguss 20 zu benetzenden Oberflächen des Dichtungselements 18, des Gehäuses 12 und der Funktionskomponente 14 haftungsverbessernd vorbehandelt sind. Hierdurch wird neben der Haftung selbst auch die Klebtechnik in der Fertigung hinsichtlich Präzision und Schnelligkeit verbessert.

Zum Verkleben eignen sich insbesondere Reaktionsklebstoffe, vorzugsweise Epoxidharzklebstoffe, welche sowohl als Schicht aufgetragen oder als Verguss angewendet werden können. Neben Epoxidharz können jedoch auch Polyurethanklebstoffe oder Silikonklebstoffe verwendet werden, welche ebenfalls schichtförmig oder als Verguss aufgebracht werden. Anstelle der vorgenannten Reaktionsklebstoffe sind jedoch auch lösungsmittelhaltige Klebstoffe verwendbar.

Wichtig für die Stärke der Adhäsionskräfte beim Verkleben der Bauteile ist die Beschaffenheit der jeweils zu verklebenden Oberflächen. Neben der bereits genannten Vorbehandlung der Oberflächen durch ein Atmosphärendruckplasma eignen sich zur Vorbehandlung auch andere Verfahren, welche eine Aufrauung der Oberfläche und damit eine bessere Verzahnung der Klebstoffmoleküle mit dem Fügeteil bewirken können. Die nächstliegende Alternative wäre ein Niederdruckplasma, welches jedoch in kontinuierlichen Prozessen schwieriger einsetzbar ist. Eine Plasmavorbehandlung eignet sich insbesondere als physikalisch-chemische Oberflächenvorbehandlung von Kunststoffen und Metallen, wobei gleichzeitig eine Reinigung und Aktivierung der Bauteileoberfläche erreicht wird. Die Verfahren selbst sind grundsätzlich bekannt und brauchen daher an dieser Stelle nicht näher erörtert werden. Anstelle der physikalisch-chemischen Vorbehandlung durch ein Plasma ist jedoch auch eine rein mechanische oder chemische Vorbehandlung anwendbar.

Figur 2 zeigt eine Bauteileanordnung 10, bei welcher die Funktionskomponente 14 unabhängig von der Abdichtung am Gehäuse 12 befestigt ist. Die Funktionskomponente 14 selbst und deren Ausgangsteil 16 sind gleich ausgebildet wie in Figur 1, ebenso das Dichtungselement 18. Zum Verkleben des Dichtungselementes 18 weist das Gehäuse gemäß Figur 2 einen radial vorspringenden Rand 26 auf, an welchem das Dichtungselement 18 seitlich ohne Verklebung anliegt. Die Abdichtung erfolgt durch eine Klebemasse 28 zwischen dem Dichtungselement 18 einerseits sowie dem Gehäusemantel 30 und dem angrenzenden Abschnitt des Gehäuserandes 26 andererseits. Die Klebemasse 28 kann hierbei wiederum als Verguss eingebracht sein oder als Klebeschicht, welche vor dem Einbringen des Dichtungselementes 18 auf den Gehäusemantel 30 aufgebracht wird. Vorzugsweise wird hierbei das elastische Dichtungselement 18 vor dem Einfügen radial komprimiert und erst im Gehäuse 12 entspannt. Die Abdichtung zwischen dem Ausgangsteil 16 und dem Dichtungselement 18 entspricht der in Figur 1 erläuterten Weise.

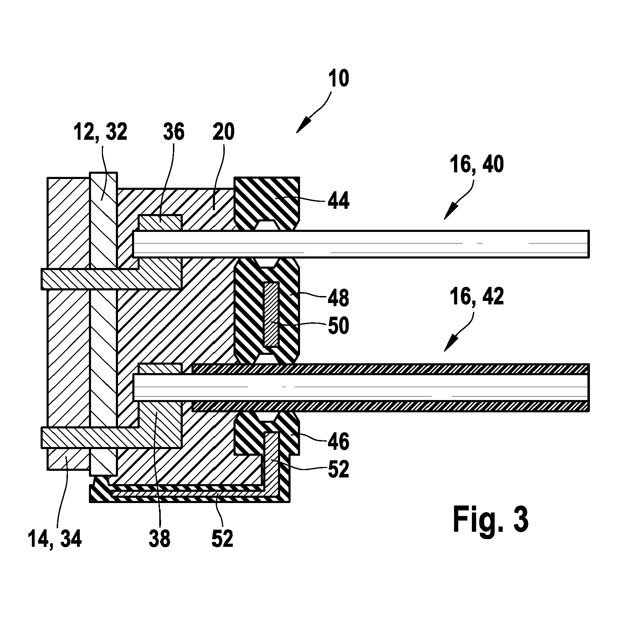

Figur 3 zeigt eine Bauteileanordnung 10, wobei von dem Gehäuse 12 nur eine Zwischenwand 32 sichtbar ist, an deren linker Seite als Funktionskomponente 14 ein elektronisches Steuergerät 34 befestigt ist, von dem zwei Kontaktfahnen 36 und 38 durch die Zwischenwand 32 hindurch in den Epoxidharzverguss 20 hineinragen. Als Ausgangsteile 16 sind hierbei einerseits mit der Kontaktfahne 36 verbundener Leiterstreifen 40 und andererseits ein mit der Kontaktfahne 38 verbundenes isoliertes Kabel 42 dargestellt. Die Abdichtung des nicht vollständig dargestellten Gehäuses 12 erfolgt durch zwei äußere Dichtungselemente 44 und 46 und ein beidseitig wirkendes inneres Dichtungselement 48, wobei auch hier die Dichtungselemente lippenförmige Dichtkonturen aufweisen.

Bei der Ausführung gemäß Figur 3 sind in das innere Dichtungselement 48 ein Einlegeteil 50 und in das äußere Dichtungselement 46 ein Einlegeteil 52 eingefügt, welche die Steifigkeit der Dichtungselemente verbessern. Zusätzlich übernimmt das Einlegteil 52 ganz oder teilweise die Funktion des Gehäuses 12 oder es ist eine integrierte Komponente des Gehäuses. Die Einlegeteile 50 und 52 können dabei wahlweise aus Kunststoff oder Metall bestehen. Die Abdichtung zwischen den Ausgangsteilen 16 und dem Innenraum des Gehäuses erfolgt in grundsätzlich gleicher Weise wie in den Figuren 1 und 2, wobei es sich in dieser Ausführung jedoch um ruhende Ausgangsteile 16 handelt, welche fest mit den Kontaktfahnen 36 und 38 verbunden sind. Das Verkleben der Dichtungselemente 44, 46 und 48 mit dem Gehäuse 12 wird entsprechend der Ausführung in Figur 1 wiederum durch einen Epoxidharzverguss 20 erreicht, welcher gleichzeitig die Arretierung der Kontaktfahnen 36 und 38 sowie der Enden des Leiterstreifens 40 und des Kabels 42 sichert.

Die erfindungsgemäßen Bauteileanordnungen 10 gewährleisten eine dauerhafte Abdichtung, welche insbesondere auch den durch starke Temperaturänderungen bedingten hohen Anforderungen im Kraftfahrzeug, insbesondere im Motorraum des Kraftfahrzeuges, gerecht werden. Die Elastizität der Dichtungselemente und eine Klebemasse mit guter Haftung an den verschiedenen Komponenten stellt die Abdichtung auch bei thermisch bedingten mechanischen Spannungen aufgrund unterschiedlicher Ausdehnungskoeffizienten der Komponenten jederzeit sicher. Die bevorzugte Werkstoffpaarung aus Epoxidharz und vulkanisiertem Silikon sichert hierbei die gewünschte Elastizität und die Haftungskraft, wobei Epoxid als Klebstoff eine besonders gute Haftung insbesondere auf Kunststoff und Keramik gewährleistet. Das verwendete vulkanisierte Silikonmaterial dichtet auch gut bei auftretenden Schwingungen an den Ausgangsteilen 16 und wirkt dort als Entkoppelungselement für die auftretenden Schwingungen.

## Patentansprüche

1. Bauteileanordnung mit einem Gehäuse (12), einer Funktionskomponente (14), einem Ausgangsteil (16) der Funktionskomponente und wenigstens einem Dichtungselement (18) aus vulkanisiertem Silikon, **dadurch gekennzeichnet, dass** zumindest das Dichtungselement (18) und das Gehäuse (12) miteinander verklebt sind.

2. Bauteileanordnung nach Anspruch 1, **dadurch gekennzeichnet, dass** als Klebemittel Epoxidharz (20) dient.

3. Bauteileanordnung nach Anspruch 1 oder 2, **dadurch gekennzeichnet, dass** die Oberfläche des Dichtungselementes (18) und/oder des Gehäuses (12) haftungsverbessernd vorbehandelt ist.

4. Bauteileanordnung nach Anspruch 3, **dadurch gekennzeichnet, dass** die Oberfläche des Dichtungselementes (18) und/oder des Gehäuses (12) durch ein Atmosphärendruckplasma vorbehandelt ist.

5. Bauteileanordnung nach einem der vorhergehenden Ansprüche, **dadurch gekennzeichnet, dass** das Dichtungselement (18) im eingebauten Zustand elastisch verformt ist und unter mechanischer Vorspannung zu dem Ausgangsteil (16) der Funktionskomponente (14) steht.

6. Bauteileanordnung nach einem der vorhergehenden Ansprüche, **dadurch gekennzeichnet, dass** das Dichtungselement (18) eine elastisch verformbare Dichtkontur (22,24) aufweist.

7. Bauteileanordnung nach Anspruch 5 oder 6, **dadurch gekennzeichnet, dass** das Dichtungselement (18) wenigstens eine an dem Ausgangsteil (16) der Funktionskomponente (14) anliegende Dichtlippe (22,24) aufweist.

8. Bauteileanordnung nach einem der vorhergehenden Ansprüche, **dadurch gekennzeichnet, dass** in das Dichtungselement (18) ein Einlegeteil (50,52) integriert ist.

9. Bauteileanordnung nach einem der vorhergehenden Ansprüche, **dadurch gekennzeichnet, dass** Epoxidharz (20) als Vergussmasse aufgebracht ist.

10. Bauteileanordnung nach einem der vorhergehenden Ansprüche, **dadurch gekennzeichnet, dass** sie als Funktionskomponente (14) ein elektronisches Steuergerät (34) und als Ausgangsteil (16) der Funktionskomponente (14) wenigstens eine elektrische Anschlussleitung (40,42) aufweist.
